# EUROPÄISCHE PATENTSCHRIFT

(11) **EP 2 654 525 B1**
(45) Veröffentlichungstag und Bekanntmachung des Hinweises auf die Patenterteilung: **04.11.2015**
(21) Anmeldenummer: 11794783.8
(22) Anmeldetag: 15.12.2011
(51) Int. Cl.: A47J 31/36

(54) **KAFFEEVOLLAUTOMAT MIT EINER DETEKTION DER VERPRESSKRAFT**
FULLY AUTOMATIC COFFEE MACHINE HAVING DETECTION OF PRESSING FORCE
MACHINE À CAFÉ ÉQUIPÉE D'UNE DÉTECTION DE LA FORCE DE PRESSAGE

(30) Priorität: 22.12.2010 DE 102010063913
(43) Veröffentlichungstag der Anmeldung: 30.10.2013
(73) Patentinhaber: BSH Hausgeräte GmbH, 81739 München (DE)
(72) Erfinder: BECK, Rudolf, 84518 Garching a. d. Alz (DE); STROBL, Robert, 83246 Unterwössen (DE); ZENZ, Ludwig, 83317 Teisendorf (DE)
(86) Internationale Anmeldenummer: PCT/EP2011/072859
(87) Internationale Veröffentlichungsnummer: WO 2012/084672

(56) Entgegenhaltungen:
- EP-A1- 1 552 777
- EP-A2- 0 299 399
- EP-A2- 0 419 398
- DE-A1- 3 316 157
- DE-C1- 3 615 158

## Beschreibung

Die Erfindung betrifft einen Kaffeevollautomaten, insbesondere für Haushaltszwecke, zur Zubereitung einer Mehrzahl unterschiedlicher Kaffeegetränke, mit einem Gehäuse einer Brüheinheit zur Aufnahme einer Brühkammer, eines Brühkopfs und eines T-Kolbens in der Brühkammer zum Verpressen von gemahlenem Kaffee und zur Aufnahme einer Erfassungseinrichtung zur Erfassung einer Verpresskraft auf den gemahlenen Kaffee. Der Begriff "Aufnahme" bedeutet dabei nicht nur das räumliche Einschließen der genannten Vorrichtungen, sondern umfasst auch die Möglichkeit, dass die Vorrichtungen auch an dem Gehäuse angebracht sind.

Die DE 3615158 C1 offenbart ein Verfahren und eine Vorrichtung zur Zubereitung einer Mehrzahl von Kaffeeportionen. Das Verfahren soll dazu führen, dass eine Mehrzahl von Kaffeegetränkeportionen in stets gleich bleibender Qualität hergestellt werden kann, ohne dass auf Schwankungen in der Kaffeebohnenbeschaffenheit, auf betriebsbedingte Funktionstoleranzen der Kaffeemaschine oder auf allmähliche Abnutzung einzelner Teile geachtet werden muss. Die Umsetzung dieses Verfahrens erfordert eine Brühkammer, in die von oben her ein verschiebbarer Kolben als Brühkopf einführbar ist, um das in die Brühkammer eingefüllte Kaffeepulver zu verdichten. Der Antrieb des Brühkopfs erfolgt durch einen Schrittmotor, der mit einem Kugelspindelantrieb verbunden ist. Er weist eine Kugelspindel auf, an deren unterem Ende der Kolben befestigt ist und die in einer Lagerung aufgenommen ist. Lediglich nebenbei erwähnt und nicht näher beschrieben ist ein Druckmessglied, das die Lagerung umfasst und mit dem der von der Kolbenstirnfläche auf den Kaffeepulverkuchen ausgeübte Druck gemessen werden kann.

Die EP 0 299 399 A2 offenbart eine Einrichtung zur Zubereitung von Kaffee in einer automatischen Kaffeemaschine, die dadurch gekennzeichnet ist, dass eine Antriebsvorrichtung vorgesehen ist, um den Brühzylinder entlang wenigstens einer Längsführung in gesteuerter Weise entlang seiner Achse zwischen vorbestimmten Stellungen hin- und herzubewegen, wobei er in der einen Bewegungsrichtung über einen im wesentlichen feststehenden zweiten Kolben fährt, dabei den ersten Kolben zwangsläufig mitschleppt, bis das eingefüllte Kaffepulver zwischen den Kolben mit einer vorbestimmten Kraft verdichtet ist, während er in der entgegengesetzten Bewegungsrichtung unter Freigabe des entsprechenden Zylinderendes vom zweiten Kolben herunterfährt und sich bezüglich dem ersten, in einer vorbestimmten Stellung arretierten Kolben verschiebt, so dass dieser die verbrauchte Kaffeepulverportion aus dem freien Zylinderende ausstößt. Auch die DE 33 16 157 A1 offenbart eine ebensolche Einrichtung zur Zubereitung von Kaffee.

Die EP 0 419 398 A2 offenbart eine Vorrichtung zum portionsweisen Aufbrühen von Getränken, die dadurch gekennzeichnet ist, dass ein Kaffeeaufnahmemittel einen aus einem elastischen Material gefertigten buchsenförmigen Körper aufweist. Schließlich offenbart noch die EP 1 552 777 A1 einen Kolben für einen Kaffeevollautomaten mit einem radial expandierendem Element, das sich radial aufweitet, wenn die Axialbelastung auf eine Dichtung aufgebracht wird.

Aufgabe der Erfindung ist es, einen Kaffeevollautomaten anzugeben, bei dem das Erreichen einer optimalen Verpresskraft unabhängig von der eigentlichen Pulvermenge detektierbar ist.

Diese Aufgabe wird bei dem eingangs genannten Kaffeeautomaten erfindungsgemäß durch ein elastisch verformbares Element mit einer definierten Federhärte erreicht, das in einer Kraftkette, die sich im Betrieb vom Brühkopf über das Gehäuse zum T-Kolben ausbildet, in einem Bereich zwischen dem Gehäuse und dem T-Kolben bzw. dem Brühkolben angeordnet ist und dessen Verformung die Erfassungseinrichtung im Betrieb des Vollautomaten detektiert. Das Kaffeepulver wird regelmäßig zwischen dem Brühkopf einerseits und dem T-Kolben andererseits verpresst, indem betragsmäßig gleich große, aber einander entgegengesetzt wirkende Kräfte auf das Kaffeepulver einwirken. Diese Kräfte werden letztlich im Gehäuse der Brüheinheit aufgenommen. Es bildet sich also eine Kraftkette im Wesentlichen vom Brühkopf innerhalb der Brühkammer über das Gehäuse zum T-Kolben in der Brühkammer bzw. umgekehrt aus, die vom kraftbeaufschlagten Kaffeepulver geschlossen wird. Die Erfindung zieht daraus die Erkenntnis, dass die Verpresskraft, die auf das Kaffeepulver einwirkt, im Wesentlichen an jedem Punkt der Kraftkette wirkt und daher an so gut wie jedem Punkt ermittelt werden kann. Sie verfolgt daher das Prinzip, die Verpresskraft an einer nahezu beliebigen Stelle innerhalb der Kraftkette zu erfassen, und zwar insbesondere am Gehäuse, an der Spindel oder am T-Kolben. Dies ermöglicht eine große Flexibilität in der Anordnung der Erfassungseinrichtung. Ihre Anordnung kann damit an konstruktive Anforderungen der Erfassungseinrichtung selbst, beispielsweise deren Empfindlichkeit und deren Stromversorgungsbedarf, oder an die konstruktiven Erfordernisse anderer Bauteile, wie etwa einer Spindel, eines Kniehebelantriebs, des T- oder des Brühkolbens, optimal angepasst werden. Dies dient der Messgenauigkeit der Erfassungseinrichtung, der durch sie erhaltenen Werte und der Einfachheit der Konstruktion.

Die Erfassungseinrichtung erfasst die Verformung des elastisch verformbaren Elements, das über eine definierte bzw. einstellbare Federhärte verfügt. Als Teil der Kraftkette zwischen Brühkopf und T-Kolben muss das elastische Element die vorgesehenen Kräfte grundsätzlich übertragen können. Es kann erfindungsgemäß jedoch das schwächste Glied dieser Kette sein und dementsprechend ausgebildet werden, da es sich unter der Aufbringung der Betriebskräfte planmäßig und vorhersehbar verformt. Es bildet damit die Kraftwirkung, die innerhalb der Brühkammer stattfindet, außerhalb der Brühkammer ab und macht sie dort für die Erfassungseinrichtung erfassbar und ablesbar. Damit lassen sich die Kraftverhältnisse innerhalb der Brühkammer wesentlich genauer erfassen, als dies bislang über mittelbare Methoden, beispielsweise die Messung eines Motorstroms, möglich war. Somit erfasst die Erfindung zwar nicht die Kraftwirkung innerhalb der Brühkammer, aber die Kraftwirkung der betragsmäßig identischen Gegenkräfte innerhalb der Kraftkette, die über das Gehäuse der Brüheinheit geschlossen wird.

Eine so genannte Hooke'sche Feder ist ein geeignetes Bauteil zur Umsetzung eines elastisch verformbaren Elements mit einer definierten Federhärte, das an vielen Stellen innerhalb der Kraftkette eingesetzt werden kann. Darunter können beispielsweise Schraubenfedern, andere Torsions- oder Biegefedern und insbesondere Tellerfedern fallen. Erfindungsgemäß verfügt ein Kaffeevollautomat mit einer Spindel zum vertikalen Verfahren der Brühkammer daher über ein Federelement verfügen, das die Spindel in ihrer Achsrichtung gefedert lagert und dessen Federweg die Erfassungseinrichtung detektiert. Die Federhärte des Federelements wird dazu so eingestellt, dass die Spindel bei Erreichen einer vorgesehenen Verpresskraft ausweichen kann, das Federelement also komprimiert wird. Die einsetzende Kompression oder das Erreichen eines Grenzwerts für die Kompression des Federelements kann die Erfassungseinrichtung detektieren und als Steuerungssignal für das Erreichen einer gewünschten Verpresskraft an eine Steuereinrichtung abgeben.

Nach einer dazu alternativen Ausgestaltungsform der Erfindung kann die Erfassungseinrichtung einen Verschiebeweg der Spindel erfassen. Damit ist die Position der Erfassungseinrichtung nicht auf den eng begrenzten Raum in unmittelbarer Nähe des Federelements bzw. nicht auf die Erfassung der Verformung der Feder festgelegt, sondern kann den Verschiebeweg der Spindel auf so gut wie ihrer gesamten Länge abgreifen. Damit lässt sich die Erfassungseinrichtung an einer größeren Anzahl von Orten innerhalb der Kaffeemaschine im Bereich der Spindel anbringen, wodurch ihre Konstruktion an Flexibilität gewinnt und mit ihrer Anordnung der verfügbare Bauraum besser ausgenutzt werden kann.

Die Erfassungseinrichtung kann den Verschiebeweg bzw. Federweg kontinuierlich erfassen, um einen relevanten Wert zu ermitteln. Nach einer weiteren vorteilhaften Ausgestaltung der Erfindung erfasst die Erfassungseinrichtung einen definierten Federweg des Federelements bzw. eines definierten Verschiebewegs der Spindel, löst also bei Erreichen eines definierten Grenzwerts für den Feder- bzw. Verschiebeweg die Abgabe eines Signals aus. Dadurch lässt sich eine besonders einfache Konstruktion für die Erfassungseinrichtung umsetzen, nämlich beispielsweise ein Schalter, der nach Zurücklegen eines bestimmten Wegs des Federelements bzw. der Spindel geöffnet oder geschlossen wird. Seine Zustandsänderung dient dann als Signal für das Erreichen der Presskraft an eine Steuereinrichtung.

Nach Erreichen der erforderlichen Verpresskraft erfolgt die Brühung des Kaffees durch eine Infusion von heißem Wasser unter Druck. Über die Brühkammer wirkt der Brühdruck auch auf die Spindel, an der sie sich abstützt und die den Brühdruck über eine Gegenkraft in Richtung ihres Lagers abtragen muss. Nach einer weiteren vorteilhaften Ausgestaltung der Erfindung kann die Spindel über einen Anschlag verfügen, der ihren Verschiebeweg bei Erreichen der erforderlichen Verpresskraft begrenzt. Die Spindel aktiviert also regelmäßig den Anschlag, wenn die Verpresskraft erreicht ist. Dadurch kann die Feder als elastisches Element von der Gegenkraft entlastet werden, wenn die Spindel den Brühdruck auf das Lager abtragen muss. Da die Feder weniger Kraftbeanspruchung erfährt, kann sie einfacher und damit kostengünstiger ausgebildet sein. Ein einfacher Anschlag kann in einem Gewindeansatz bestehen, der in radialer Richtung über einen Lagerzapfen der Spindel übersteht und eine stirnseitige ringförmige Ebene aufweist, die sich parallel zu einer Oberseite des Lagers erstreckt. Bei Erreichen der Verpresskraft kann der Gewindeansatz auf der Oberseite des Lagers aufsitzen und so eine weitere Verschiebung der Spindel verhindern.

Neben der Spindel können noch weitere Orte der Kraftkette als Position der Erfassungseinrichtung in Frage kommen. Nach einer weiteren Ausgestaltungsform kann die Erfassungseinrichtung am T-Kolben positioniert sein bzw. seinen Verschiebeweg detektieren. Dazu ist er unmittelbar oder zumindest mittelbar gefedert zu lagern. Gegenüber einem Kniehebelantrieb kann jedoch der dortige lange Federweg entfallen bzw. könnte stark verkürzt werden, weil der T-Kolben mit einer Spindel zusammenwirkt. Eine Kompensation ggf. unterschiedlicher Kaffeepulvermengen kann daher über eine angepasste Positionierung der Brüheinheit an der Spindel erfolgen. Die Detektion des Verschiebewegs des T-Kolbens hat jedoch den Vorteil einer höheren Genauigkeit: Der T-Kolben wird bekanntermaßen mit Dichtringen geringen Durchmessers, nämlich demjenigen einer ihn antreibenden T-Kolbenstange, gegenüber der Brühkammer abgedichtet. Der Brühkopf dagegen erfordert Dichtringe mit dem demgegenüber wesentlich größeren Durchmesser der Brühkammer. Bei der Erfassung der Verpresskraft sind daher grundsätzlich die Reibungskräfte der Dichtringe zu berücksichtigen, die infolge Alters, Feuchtigkeit, Fett etc. das Messergebnis verfälschen könnten. Bei der Erfassung der Verpresskraft des T-Kolbens sind wegen der kleineren Dichtringe daher nur geringere Abweichungen zu berücksichtigen als die im Vergleich dazu wesentlich größeren infolge der größeren Dichtringe des Brühkopfs. Deshalb sind bei der Erfassung der Verpresskraft des T-Kolbens geringere Abweichungen bzw. eine höhere Genauigkeit des Messergebnisses zu erwarten.

Die Elastizität eines bisher beschriebenen Hooke'schen Federelements ergibt sich im Wesentlichen aus seiner Formgebung. Nach einer weiteren vorteilhaften Ausgestaltung der Erfindung kann die Elastizität des elastisch verformbaren Elements auf seiner Materialelastizität beruhen. Dadurch ergeben sich weitere konstruktive Möglichkeiten für das elastische Element einerseits und für die Erfassungseinrichtung andererseits, die beispielsweise einen geringeren Platzbedarf oder eine einfachere Montage bedeuten können.

Nach einer weiteren vorteilhaften Ausgestaltung kann das elastisch verformbare Element an einer Seitenwand der Brühkammer oder an Wandungen des Gehäuses der Brüheinheit angebracht sein. Da das Gehäuse in der Kraftkette zwischen Brühkopf und T-Kolben liegt bzw. die Gegenkräfte zu den dort wirkenden Verpresskräften aufnimmt, kann das elastisch verformbare Element auch dort angebracht sein. Aber auch die Brühkammer unterliegt den Auswirkungen der Verpresskräfte: Sie wird rechtwinklig zu deren Wirkungsrichtung durch die seitliche Expansion des Kaffeepulvers unter der Belastung beaufschlagt. Da die seitliche Expansion des Kaffeepulvers in alle Richtungen senkrecht zur Verpresskraft gleichermaßen wirkt, kann die Brühkammer sie durch ihren ringförmigen Grundriss abtragen. Die dafür erforderlichen Gegenkräfte rufen die geringe Elastizität des Materials der Brühkammerwände hervor. In beiden Fällen, also sowohl bei den Wandungen des Gehäuses der Brüheinheit als auch bei denjenigen der Brühkammer selbst, lässt sich ein elastisch verformbares Element einsetzen, das eine geringere Elastizität als das Material der Seitenwände aufweist. Auch dessen Verformungen lassen sich bezüglich eines Grenzwerts überwachen bzw. stufenlos ermitteln. Da das elastische Element keine beweglichen Teile umfasst, führt es zu einer besonders robusten Ausführung.

Nach einer weiteren vorteilhaften Ausgestaltung der Erfindung kann das elastisch verformbare Element durch eine planmäßige lokale Materialschwächung ausgebildet sein. Beispielsweise lässt es sich als Steg mit einer geringeren Materialstärke als das übrige Bauteil ausbilden. Unter Belastung verformt sich der Steg stärker als seine Umgebung, was die Erfassungseinrichtung detektieren kann. Eine Ausbildung als lokale Materialschwächung ist besonders einfach, da kein separates Bauteil in die Kraftkette eingefügt werden muss.

Nach einer weiteren vorteilhaften Ausgestaltung der Erfindung kann die Erfassungseinrichtung durch einen Dehnungsmessstreifen ausgebildet sein. Er ermöglicht eine stufenlose Erfassung einer Dehnung des elastischen Elements als Reaktion und Abbild einer Kraftwirkung. Außerdem erfordert er nur einen äußerst geringen Platzbedarf. Er lässt sich damit an nahezu jeder beliebigen Stelle der Kraftkette im Kaffeevollautomaten anbringen.

Nach einer dazu alternativen Ausgestaltungsform der Erfindung kann die Erfassungseinrichtung aus einem Schalter oder einem Sensor bestehen. Als Schalter kommen Mikroschalter, induktive oder kapazitive Schalter in Frage, als Sensoren z. B. Hallsensoren oder Reedkontakte bzw. Lichtschranken. Sie können direkt oder indirekt angesprochen werden. Ihre Auswahl orientiert sich an dem zur Verfügung stehenden Bauraum, ihrer Verschmutzungsanfälligkeit, den Möglichkeiten, sie samt Brühgruppe oder Teilen davon zu entnehmen und sie an eine Stromversorgung anzuschließen.

Das Prinzip der Erfindung wird im Folgenden anhand einer Zeichnung beispielshalber noch näher erläutert. In der Zeichnung zeigen:
- Figur 1:: eine schematische Darstellung einer Brüheinheit eines Kaffeevollautomaten,
- Figur 2:: die Spindel als Detail der Figur 1 in einer ersten Stellung, und
- Figur 3:: die Spindel in einer zweiten Stellung.

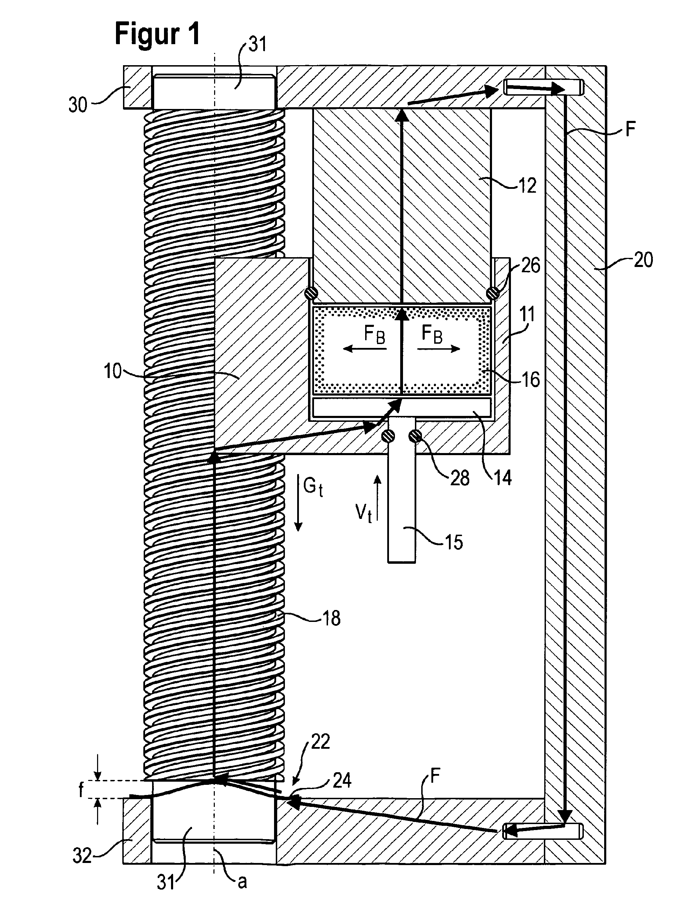

Figur 1 zeigt eine stark vereinfachte und schematisierte Ansicht einer Brüheinheit eines Kaffeevollautomaten. Sie umfasst eine zylindrische Brühkammer 10, in die von ihrer offenen Oberseite aus ein ebenfalls zylindrischer Brühkopf 12 hineinragt. Ihm gegenüber liegt in der Brühkammer 10 ein T-Kolben 14, so dass zwischen ihm und dem Brühkopf 12 gemahlenes Kaffeepulver 16 verpresst werden kann. Dazu wird der T-Kolben 14 über seine Kolbenstange 15 und eine nicht dargestellte Antriebseinheit angetrieben, die sich an einer senkrecht stehenden Spindel 18 abstützt. Der T-Kolben 14 übt während des Verpressens des Kaffeepulvers 16 eine Verpresskraft Vₜ aus, der eine betragsgleiche, aber entgegen gerichtete Stützkraft Gₜ der Antriebseinheit entspricht, mit der diese sich an der Spindel 18 abstützt. Der Brühkopf 12 ist über einen großen Dichtungsring 26 gegenüber der Seitenwand 11 der Brühkammer 10 abgedichtet, die T-Kolbenstange 15 über einen kleinen Dichtungsring 28.

Die Brühkammer 10 ist an der Spindel 18 verfahrbar angeschlossen. Diese ist innerhalb eines Gehäuses 20 der Brüheinheit mit zwei Lagerzapfen 31 in einem oberen Lager 30 und einem unteren Lager 32 um ihre Achse a drehbar und außerdem in der Achsrichtung a um einen Federweg f verschiebbar gelagert. Eine Tellerfeder 24 als Federelement, die Bestandteil einer Erfassungseinrichtung 22 ist, ist an ihrem unteren Zapfen 31 auf der Spindel 18 aufgesteckt und am unteren Lager 32 abgestützt. Sie drückt die Spindel 18 gegen ihr oberes Lager 30. Die Zapfen 31 verfügen über eine ausreichende axiale Länge, so dass sie in den Lagern 30, 32 axial verschiebbar sind und im dargestellten entspannten Zustand der Tellerfeder 24 der Spindel 18 einen Federweg f bieten.

Die Spindel 18 dient dazu, die Brühkammer 10 während verschiedener Abschnitte des Zubereitungsvorgangs eines Kaffeegetränks innerhalb des Gehäuses 20 vertikal zu verschieben. In der dargestellten Position ist die Brühkammer 10 durch das Eintauchen des Brühkopfes 12 von ihrer Oberseite aus verschlossen. Der T-Kolben 14 befindet sich noch in einer unteren Position, aus der er mittels des nicht dargestellten Antriebs gegen den Brühkopf 12 verfahren werden kann, um das Kaffeepulver 16 zu verpressen. Nach einer Infusion von Brühwasser und der Ableitung des so gewonnenen Kaffeegetränks verfährt die Spindel 18 die Brühkammer 10 in eine abgesenkte Position, in der die Brühkammer 10 vom inzwischen verbrauchten Kaffeetrester befreit und mit frischem gemahlenen Kaffeepulver 16 befüllt werden kann.

Um einen optimalen Espresso oder Kaffee Crema zu erhalten, muss das Kaffeepulver 16 unter einem Druck von etwa 6 bis 8 bar gebrüht werden. Dieser Druck kann u. a. durch das Verpressen des Kaffeepulvers 16 erzeugt werden. Es setzt dem Brühwasser einen Durchflusswiderstand entgegen, der den nötigen Druck erzeugt. Dabei entscheidet neben weiteren Faktoren wie z. B. dem Mahlgrad auch der Grad der Verpressung über den Durchflusswiderstand und damit über den Brühdruck. Die Verpressung des Kaffeepulvers 16 innerhalb der Brühkammer 10 ist daher für die Qualität des Getränks von großer Bedeutung. Sie sollte auch bei unterschiedlichen Mengen an gemahlenem Kaffee 16 in gleicher Intensität erfolgen. Unterschiedliche Mengen an gemahlenem Kaffee 16 können sich beispielsweise durch eine Alterung des Mahlwerks oder unterschiedliche Röstgrade des verwendeten Kaffees ergeben. Ein Ausgleich unterschiedlicher Mengen erfolgt durch eine angepasste Positionierung der Brühkammer 10 entlang der drehbaren Spindel 18 gegenüber dem feststehenden Brühkopf 12 während des Brühvorgangs.

Hat die Brühkammer 10 die geeignete Ausgangsposition für den Brühvorgang erreicht, beginnt die Verpressung des gemahlenen Kaffees 16 durch den Antrieb des T-Kolbens 14 in Richtung auf den Brühkopf 12 zu. Die nicht dargestellte Antriebseinrichtung des T-Kolbens 14 stützt sich ebenfalls an der Spindel 18 ab. Die Verpresskraft Vₜ des T-Kolbens 14, die aufwärts gegen den Brühkopf 12 drückt, ruft daher an der Spindel 18 eine Gegen- oder Stützkraft Gₜ hervor, die die Spindel 18 auf ihr unteres Lager 32 zu und dort gegen die Feder 24 drückt.

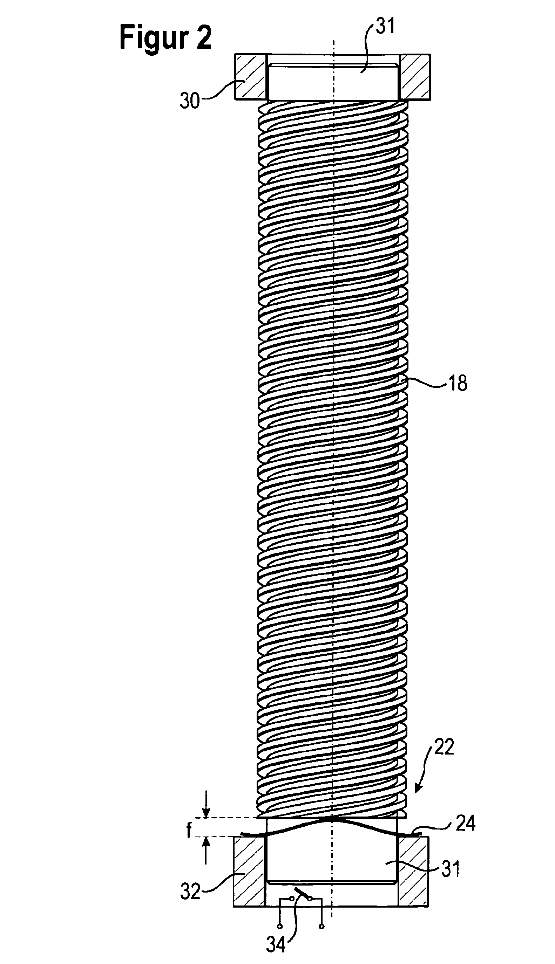

Figur 2 zeigt einen Ausschnitt aus Figur 1, nämlich die Spindel 18 mit ihrem oberen Lager 30 und dem unteren Lager 32. Dort befindet sich die Erfassungseinrichtung 22, die sich aus der Tellerfeder 24 und einem Mikroschalter 34 zusammensetzt. Er ist in der dargestellten unbelasteten Situation der Spindel 18 und im entspannten, nicht komprimierten Zustand der Tellerfeder 24 geöffnet.

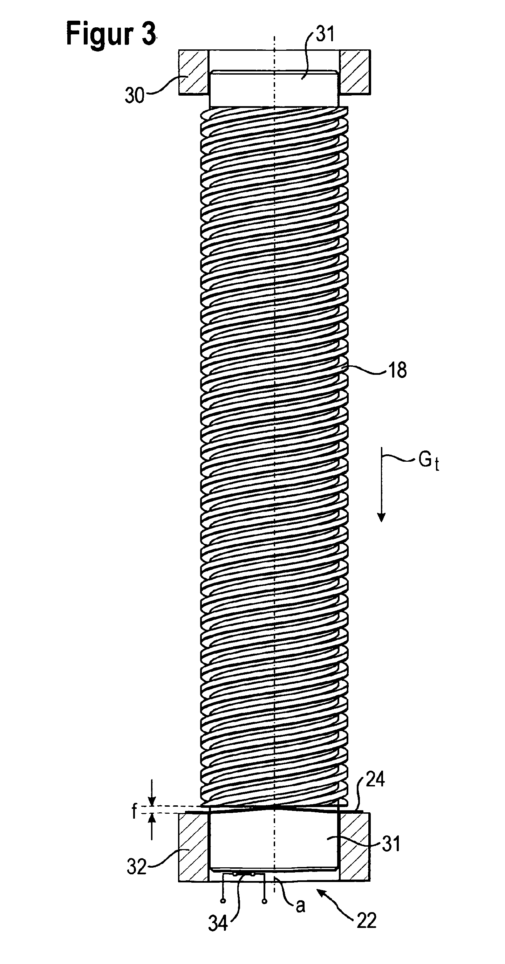

Mit zunehmender Kompression des Kaffeepulvers 16 in der Brühkammer 10 durch den T-Kolben 14 steigt auch die Stützkraft Gₜ, die er auf die Spindel 18 ausübt. Sie führt zu einer steigenden Druckbelastung der Tellerfeder 24, die schließlich bis zu einem definierten Maß komprimiert ist. Diese Situation gibt Figur 3 wieder. Dort ist die Tellerfeder 24 so weit komprimiert, dass der Mikroschalter 34 geschlossen ist und nur noch ein geringer Federweg f zur Verfügung steht. Der geschlossene Schalter 34 ruft ein Signal hervor, das einer Steuereinheit des Kaffeevollautomaten die Information gibt, dass eine vorgegebene bzw. erforderliche Verpresskraft in der Brühkammer 10 erreicht ist. Jetzt kann die Infusion des Zubereitungswassers erfolgen.

Die dargestellte Konstruktion der Erfassungseinrichtung 22 aus der Tellerfeder 24 und dem Mikroschalter 34 beansprucht nur einen minimalen Bauraum, weil die Tellerfeder 24 nur einen sehr geringen Federweg f von wenigen Millimetern erfordert. Sie ist so ausgelegt und bemessen, dass sie sich erst bei einer Stützkraft Gₜ vollständig komprimieren lässt, die der erforderlichen Verpresskraft Vₜ des Kaffeepulvers 16 in der Brühkammer 10 entspricht.

Der Mikroschalter 34 liegt in einem Bereich des Kaffeevollautomaten, der vor Schmutz und Feuchtigkeit gut geschützt ist. Auch bei einer entnehmbaren Brüheinheit liegt der Mikroschalter 34 günstig, da durch seine Nähe zum unteren Lager 32 und eine dortige Motoranbindung einfache Anschluss- und Kontaktierungsmöglichkeiten bestehen und Toleranzen zwischen den mechanischen und elektrischen Schnittstellen gering gehalten werden können.

Figur 1 zeigt außerdem einen stark schematisierten Kräfteverlauf innerhalb des Gehäuses 20 als durchgehende Kette von Kräften F. Sie soll lediglich den Kräfteverlauf und nicht die tatsächlichen Kraftrichtungen und -beträge wiedergeben. Ausgehend vom T-Kolben 14 wirken die Verpresskräfte bzw. deren Reaktionskräfte demnach auf das Kaffeepulver 16, das sie an den Brühkopf 12 weitergibt. Von dort werden sie in und durch das Gehäuse 20 der Brüheinheit geleitet. Über das untere Lager 32 gelangen sie in die Spindel 18, von wo aus sie über die nicht dargestellte Antriebseinrichtung schließlich auf den T-Kolben 14 übertragen werden. Der schematisierte Kräfteverlauf verdeutlicht, an welchen Orten eine Kraftwirkung innerhalb des Gehäuses 20 der Brüheinheit aufgrund der Verpressung in der Brühkammer 10 stattfindet.

Eine separate Betrachtung betrifft die Brühkammer 10: Dort ruft die Verpressung des Kaffeepulvers 16 Kräftereaktionen nicht nur im Verlauf der dargestellten Kraftkette hervor. Der entstehende Druck in der Brühkammer 10 breitet sich vielmehr gleichmäßig und allseitig in alle Raumrichtungen innerhalb der Brühkammer 10 aus. Seine horizontalen Komponenten, radiale Druckkräfte F_{B}, werden von den zylindrischen Wandung 11 der Brühkammer 10 aufgenommen.

Abweichend von der dargestellten Position der Erfassungseinrichtung 22 kann sie daher grundsätzlich an nahezu jedem anderen Ort im Bereich des dargestellten Kräfteverlaufs angeordnet werden. Als elastisch verformbares Element muss dazu keine Tellerfeder 24 verwendet werden, deren Elastizität sich vor allem aus ihrer Form ergibt. Je nach Bauraum oder Bauteil kann auch ein elastisch verformbares Element zum Einsatz kommen, das auf Materialelastizität beruht. Daher können Kraftwirkungen der Verpressung des Kaffeepulvers 16 in der Brühkammer 10 auch in ihrer Wandung 11 detektiert werden. Dort eignet sich der Einsatz eines elastischen Federelements, das auf Materialelastizität beruht.

Da es sich bei der vorhergehenden, detailliert beschriebenen Brüheinheit um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Erfassungseinrichtung wie angedeutet in anderer Form als in der hier beschriebenen erfolgen. Ebenso kann der Ort der Erfassungseinrichtung abweichen, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 10: Brühkammer
- 11: Wandung der Brühkammer 10
- 12: Brühkopf
- 14: T-Kolben
- 15: T-Kolbenstange
- 16: Gemahlener Kaffee
- 18: Spindel
- 19: unterer Gewindeansatz
- 20: Gehäuse
- 22: Erfassungseinrichtung
- 24: Tellerfeder
- 26: großer Dichtungsring
- 28: kleiner Dichtungsring
- 30: oberes Lager
- 31: Zapfen der Spindel 18
- 32: unteres Lager
- 33: Oberseite
- 34: Mikroschalter

- a: Drehachse der Spindel 18
- f: Federweg der Tellerfeder 24
- F: Kraftkette
- F_{B}: radiale Druckkräfte in der Brühkammer 10
- Vₜ: Verpresskraft
- Gₜ: Stützkraft

## Patentansprüche

1. Kaffeevollautomat, insbesondere für Haushaltszwecke, zur Zubereitung einer Mehrzahl unterschiedlicher Kaffeegetränke, mit einem Gehäuse (20) einer Brüheinheit zur Aufnahme einer Brühkammer (10), mit einer Spindel (18) zum Verfahren der Brühkammer (10), mit einem Brühkopf (12), mit einem T-Kolben (14) zum Verpressen von gemahlenem Kaffee (16) in der Brühkammer (10) und zur Aufnahme einer Erfassungseinrichtung (22) zur Erfassung einer Verpresskraft auf den gemahlenen Kaffee (16), wobei ein Federelement (24) mit einer definierten Federhärte, das in einer Kraftkette, die sich im Betrieb vom Brühkopf (12) über das Gehäuse (20) zum T-Kolben (14) ausbildet, in einem Bereich zwischen dem Gehäuse (20) und dem T-Kolben (14) angeordnet ist und dessen Verformung die Erfassungseinrichtung (22) im Betrieb des Automaten detektiert, **dadurch gekennzeichnet, dass** das Federelement (24) die Spindel (18) in ihrer Achsenrichtung (a) gefedert lagert und dessen Federweg die Erfassungseinrichtung (22) detektiert.

2. Kaffeevollautomat nach Anspruch 1, **gekennzeichnet durch** die Erfassung eines Verschiebewegs der Spindel (18).

3. Kaffeevollautomat nach Anspruch 2, **dadurch gekennzeichnet, dass** das Federelement (24) die Erfassungseinrichtung (22) nach einem definierten Mindestfederweg aktiviert.

4. Kaffeevollautomat nach Anspruch 1, **gekennzeichnet durch** ein elastisch verformbares Element, das auf der Materialelastizität des Elements beruht.

5. Kaffeevollautomat nach Anspruch 4 **gekennzeichnet durch** eine definierte lokale Materialschwächung als elastisch verformbares Element.

6. Kaffeevollautomat nach Anspruch 4, **gekennzeichnet durch** einen Dehnungsmessstreifen als Erfassungseinrichtung.

7. Kaffeevollautomat nach einem der obigen Ansprüche, **gekennzeichnet durch** einen Schalter oder einen Sensor als Erfassungseinrichtung.

## Claims

1. Fully automatic coffee machine, particularly for domestic purposes, for the preparation of a plurality of different coffee beverages, having a housing (20) of a brewing unit for accommodating a brewing chamber (10), having a spindle (18) for moving the brewing chamber (10), having a brewing head (12) with a T-piston (14) for pressing ground coffee (16) in the brewing chamber (10) and for accommodating a detection facility (22) for detecting a pressing force on the ground coffee (16), wherein a spring element (24) with a defined spring stiffness, which is arranged in a power chain, which develops during operation from the brewing head (12) via the housing (20 to the T-piston (14), is disposed in a region between the housing (20) and the T-piston (14), and the deformation of which is detected by the detection facility (22) during operation of the machine, **characterised in that** the spring element (24) supports the spindle (18) in a spring-loaded manner in its axial direction (a) and the spring stroke of which is detected by the detection facility (22).

2. Fully automatic coffee machine according to claim 1, **characterised by** the detection of a displacement path of the spindle (18).

3. Fully automatic coffee machine according to claim 2, **characterised in that** the spring element (24) activates the detection facility (22) after a defined minimum spring stroke.

4. Fully automatic coffee machine according to claim 1, **characterised by** an elastically deformable element, which is based on the material elasticity of the element.

5. Fully automatic coffee machine according to claim 4, **characterised by** a defined local material weakening as an elastically deformable element.

6. Fully automatic coffee machine according to claim 4, **characterised by** a resistance strain gauge as a detection facility.

7. Fully automatic coffee machine according to one of the above claims, **characterised by** a switch or a sensor as the detection facility.

## Revendications

1. Machine à café entièrement automatique, notamment à usage domestique, destinée à la préparation d'une pluralité de boissons différentes à base de café, comprenant un boîtier (20) d'une unité de percolation destiné au logement d'une chambre de percolation (10), comprenant une broche (18) destinée à déplacer la chambre de percolation (10), comprenant une tête de percolation (12), comprenant un piston en T (14) destiné à presser du café moulu (16) dans la chambre de percolation (10) et à loger un dispositif de détection (22) permettant de détecter une force de pression sur le café moulu (16), un élément élastique (24) ayant une dureté définie, lequel est disposé dans une chaîne de force qui se forme de la tête de percolation (12) vers le piston en T (14) par l'intermédiaire du boîtier (20) pendant le fonctionnement, étant disposé dans une zone entre le boîtier (20) et le piston en T (14), et dont la déformation est détectée par le dispositif de détection (22) pendant le fonctionnement de la machine automatique, **caractérisée en ce que** l'élément élastique (24) loge la broche (18) de manière élastique dans la direction d'axe (a) de celle-ci et **en ce que** le dispositif de détection (22) détecte la trajectoire de ressort.

2. Machine à café entièrement automatique selon la revendication 1, **caractérisée par** la détection d'une trajectoire de déplacement de la broche (18).

3. Machine à café entièrement automatique selon la revendication 2, **caractérisée en ce que** l'élément élastique (24) active le dispositif de détection (22) après une trajectoire de ressort minimale définie.

4. Machine à café entièrement automatique selon la revendication 1, **caractérisée par** un élément élastiquement déformable, qui repose sur l'élasticité de la matière de l'élément.

5. Machine à café entièrement automatique selon la revendication 4, **caractérisée par** un affaiblissement de matière local défini en tant qu'élément élastiquement déformable.

6. Machine à café entièrement automatique selon la revendication 4, **caractérisée par** une jauge extensométrique en tant que dispositif de détection.

7. Machine à café entièrement automatique selon l'une quelconque des revendications précédentes, **caractérisée par** un commutateur ou un capteur en tant que dispositif de détection.
